# EUROPEAN PATENT APPLICATION

(11) **EP 2 261 465 A1**
(43) Date of publication of application: **15.12.2010**
(21) Application number: 08873274.8
(22) Date of filing: 22.09.2008
(51) Int. Cl.: F01D 15/10, F01D 25/00, F25B 11/02, H02K 7/18

(54) **TURBINE GENERATOR AND REFRIGERATION APPARATUS HAVING TURBINE GENERATOR**

(30) Priority: 13.03.2008 JP 2008064030
(71) Applicant: Daikin Industries, Ltd., Osaka-shi, Osaka 530-8323 (JP)
(72) Inventor: HIKAWA, Takeshi, Sakai-shi Osaka 591-8511 (JP); YAMAGUCHI, Takahiro, Sakai-shi Osaka 591-8511 (JP)
(74) Representative: HOFFMANN EITLE
(86) International application number: PCT/JP2008/002609
(87) International publication number: WO 2009/113132

(57) **Abstract**

A turbine generator (1) is formed with a gas-refrigerant storage space (10) over a power generation mechanism (2) inside of a casing (3, 4, 5) and a liquid-refrigerant storage space (11) under the power generation mechanism (2). The turbine generator (1) is provided with a gas-refrigerant outlet pipe (7) penetrating the casing (3, 4, 5) and leading to the gas-refrigerant storage space (10) and a liquid-refrigerant outlet pipe (8) penetrating the casing (3, 4, 5) and leading to the liquid-refrigerant storage space (11).

## Description

### TECHNICAL FIELD

The present invention relates to a turbine generator and a refrigerating apparatus provided with the turbine generator, and particularly to a structure of the turbine generator.

### BACKGROUND ART

Conventionally, a refrigerant circuit for conducting a vapor-compression refrigeration cycle is known and widely used for a refrigerating apparatus or the like. In order to improve the performance of this refrigerating apparatus, many arts have been proposed.

In a refrigerating apparatus described in PATENT DOCUMENT 1, an electric motor is connected to a compressor, and a power recoverer is connected to an expander. In this refrigerating apparatus, the electric motor drives the compressor to circulate a refrigerant through a refrigerant circuit, and the refrigerant rotates a turbine with kinetic energy thereof when passing the expander to allow the power recoverer to generate electric power. The generated electric power is supplied to the electric motor to reduce the electric energy supplied to the electric motor from the outside. Therefore, the coefficient of performance of the refrigerating apparatus described above can be improved.

Furthermore, in the refrigerant circuit of the refrigerating apparatus described above, a gas-liquid separator may be provided between an expansion valve and an evaporator. The gas-liquid separator is used for sending, into the evaporator, only a liquid refrigerant contained in a two-phase refrigerant flowing out of the expansion valve. According to this configuration, a gas refrigerant is prevented from flowing into the evaporator from the inlet side thereof, thereby enabling the evaporator to evaporate the liquid refrigerant by effectively utilizing the area of a heat-transfer surface in an inlet part of the evaporator. Therefore, the heat-transfer performance of the evaporator can be improved.

### CITATION LIST

### PATENT DOCUMENT

PATENT DOCUMENT 1: Japanese Patent Publication No. 2000-241033

### SUMMARY OF THE INVENTION

### TECHNICAL PROBLEM

However, if the above power recoverer and gas-liquid separator are both provided to improve the coefficient of performance of a refrigerating apparatus, the refrigerating apparatus may undesirably require a greater cost and a larger size.

In view of the foregoing, it is an object of the present invention to provide a turbine generator capable of recovering the kinetic energy of a refrigerant circulating through a refrigerant circuit and having the function of separating the refrigerant into gas and liquid refrigerants.

### SOLUTION TO THE PROBLEM

A turbine generator according to a first aspect of the present invention includes a casing body (3, 4, 5) and a power generation mechanism (2) housed in the casing body (3, 4, 5), the power generation mechanism (2) having a turbine (25) making a rotational motion, a turbine shaft (24) attached to the turbine (25), a power-generation coil portion (21) penetrated by the turbine shaft (24), and bearing portions (20, 22) arranged on both sides in the axial directions of the power-generation coil portion (21) and supporting the turbine shaft (24) with the turbine shaft (24) rotatable, the power-generation coil portion (21) and the bearing portions (20, 22) being fixed to the inner circumferential surface of the casing body (3, 4, 5), a refrigerant inlet pipe (6) being provided which penetrates the casing body (3, 4, 5) and a pipe end of which faces the turbine (25) of the power generation mechanism (2), and the turbine (25) being rotated by a refrigerant flowing thereinto from the refrigerant inlet pipe (6) to generate power in the power-generation coil portion (21).

Then, in the above turbine generator, a first storage space (10) is formed over the power generation mechanism (2) and a second storage space (11) is formed under the power generation mechanism (2), and a first refrigerant outlet pipe (7) is provided on the side of the first storage space (10) and a second refrigerant outlet pipe (8) is provided on the side of the second storage space (11). Here, the turbine (25) may be configured to be housed in a turbine casing (26). In this case, the turbine casing (26) is provided with an inlet (27) and an outlet (28), and a refrigerant flowing into the turbine (25) from the refrigerant inlet pipe (6) of the casing body (3, 4, 5) inflows through the inlet (27) and outflows through the outlet (28) after flowing out of the turbine (25).

The turbine generator according to the first aspect is capable of separating a two-phase refrigerant which has flowed out of the turbine (25) and storing a gas refrigerant thereof in the first storage space (10) located over the power generation mechanism (2) and a liquid refrigerant thereof in the second storage space (11) located under the power generation mechanism (2). Then, the gas refrigerant stored in the first storage space (10) flows out of the casing body (3, 4, 5) through the first refrigerant outlet pipe (7), while the liquid refrigerant stored in the second storage space (11) flows out of the casing body (3, 4, 5) through the second refrigerant outlet pipe (8).

According to a second aspect of the present invention, in the turbine generator according to the first aspect, a first trapping member (80) trapping a liquid drop contained in a gas refrigerant inside of the first storage space (10) is provided in the first storage space (10), and the first trapping member (80) faces a pipe end of the first refrigerant outlet pipe (7).

In the turbine generator according to the second aspect, after a two-phase refrigerant has flowed out of the turbine (25), even if liquid drops of the refrigerant sent together with a gas refrigerant thereof fly around inside of the first storage space (10), the first trapping member (80) prevents those liquid drops from flowing out through the first refrigerant outlet pipe (7). Preferably, the first trapping member (80) may be a member which allows only a gas refrigerant to pass through while trapping a liquid refrigerant, such as a mesh member and a punching metal.

According to a third aspect of the present invention, in the turbine generator according to the first or second aspect: the turbine shaft (24) is configured to penetrate the turbine (25) at the center thereof; and a second trapping member (81) trapping a liquid drop contained in a gas refrigerant inside of the first storage space (10) is attached to the end part of the turbine shaft (24) on the side of the turbine (25). The second trapping member (81) is attached to the turbine shaft (24) and thereby can rotate with the turbine shaft (24).

In the turbine generator according to the third aspect, the second trapping member (81) makes a rotational motion and releases trapped liquid drops therefrom forcedly by the centrifugal force of the rotational motion. Therefore, liquid drops can be trapped and released more smoothly than when the second trapping member (81) makes no rotational motion.

According to a fourth aspect of the present invention, in the turbine generator according to any one of the first to third aspects, a guide member (29) is provided which swirls a refrigerant flowing out of the turbine (25) along the inner circumferential surface of the casing body (3, 4, 5) and guides the refrigerant to the second storage space (11).

In the turbine generator according to the fourth aspect, the guide member (29) swirls a two-phase refrigerant which has flowed out of the turbine (25) along the inner circumferential surface of the casing body (3, 4, 5). Therefore, a two-phase refrigerant which has flowed out of the turbine (25) can be restrained from perpendicularly striking against the inner circumferential surface of the casing body (3, 4, 5) to send a liquid refrigerant thereof flying around. Besides, a two-phase refrigerant which has flowed out of the turbine (25) is swirled and thereby separated into gas and liquid refrigerants more easily by the centrifugal separation effect thereof.

In the turbine generator according to the fourth aspect, preferably, the turbine (25) may be housed in the turbine casing (26). This is because housing the turbine (25) in the turbine casing (26) enables a refrigerant to outflow in a fixed direction from the outlet (28), so that the refrigerant can be more easily guided to the guide member (29).

According to a fifth aspect of the present invention, in the turbine generator according to any one of the first to fourth aspects: fixing members (20a, 22a) are provided which fix the bearing portions (20, 22) to the casing body (3, 4, 5); and the fixing members (20a, 22a) are arranged between the casing body (3, 4, 5) and the bearing portions (20, 22) and are each formed with one or a plurality of through holes (20b, 22b). The space enclosed with the casing body (3, 4, 5) and the bearing portions (20, 22) is between the first storage space (10) and the second storage space (11) and forms a passage for a liquid refrigerant contained in a two-phase refrigerant which has flowed out of the turbine (25). Then, the fixing members (20a, 22a) are arranged in the above space and thereby work as resistance hindering the flow of the liquid refrigerant.

In the turbine generator according to the fifth aspect, the fixing members (20a, 22a) are formed with the through holes (20b, 22b) to allow the liquid refrigerant to flow through the through holes (20b, 22b), so that the liquid refrigerant can flow more easily from the first storage space (10) to the second storage space (11).

According to a sixth aspect of the present invention, in the turbine generator according to any one of the first to fifth aspects, the turbine (25) is configured by an impulse turbine (25).

In the turbine generator according to the sixth aspect, the turbine (25) of the power generation mechanism (2) is configured by the impulse turbine (25), so that the velocity energy of a refrigerant flowing out of the refrigerant inlet pipe (6) can be efficiently converted into generated electric energy.

A refrigerating apparatus according to a seventh aspect of the present invention includes a refrigerant circuit (31) for conducting a vapor-compression refrigeration cycle, the refrigerant circuit (31) being formed by connecting a compressor (44), a radiator (51a), an expansion mechanism (54) and an evaporator (51a) by refrigerant piping.

Then, in the above refrigerating apparatus, the turbine generator according to the sixth aspect is provided, the refrigerant inlet pipe (6) of the turbine generator is connected to outlet piping (65) of the expansion mechanism (54), the first refrigerant outlet pipe (7) is connected to suction piping (68) of the compressor (44), and the second refrigerant outlet pipe (8) is connected to inlet piping of the evaporator (51a).

In the refrigerating apparatus according to the seventh aspect, the turbine generator according to the sixth aspect, or the turbine generator having a gas-liquid separation function, can be connected to the refrigerant circuit (31) for conducting a vapor-compression refrigeration cycle. Therefore, the turbine (25) can be rotated with the kinetic energy of a refrigerant circulating through the refrigerant circuit (31) and the evaporator (51a) of the refrigerant circuit (31) can be supplied with only a liquid refrigerant.

According to an eighth aspect of the present invention, in the refrigerating apparatus according to the seventh aspect: a generated-energy measurement section is provided which measures electric energy generated by the turbine generator, and an arithmetic section is provided which on the basis of the input of operation data on the refrigerating apparatus, calculates and outputs electric energy generated by the turbine generator when the bearing portions (20, 22) are not immersed in a liquid refrigerant; and a control means (63) is provided which if a value measured by the generated-energy measurement section is smaller than a value calculated by the arithmetic section, then executes control in such a way that a refrigerant is inhibited from flowing into the turbine generator.

Here, assuming that the bearing portions (20, 22) are not immersed in a liquid refrigerant, the arithmetic section has in advance, operation data on various operation conditions of the refrigerating apparatus and data (database) on electric energy generated by the turbine generator which corresponds to the operation data. In addition to the database, it has a calculation formula showing a relationship between the operation data on the refrigerating apparatus and the data on the generated electric energy of the turbine generator. On the basis of the database and the calculation formula, when the bearing portions (20, 22) are not immersed in a liquid refrigerant, electric energy generated by the turbine generator is calculated.

In the refrigerating apparatus according to the eighth aspect, if a measured value is smaller than the above calculated value, the control means (63) executes control in such a way that a refrigerant is inhibited from flowing into the turbine generator. Here, the calculated value is the generated electric energy when the bearing portions (20, 22) are not immersed in a liquid refrigerant. Hence, the fact that the measured value is smaller than the calculated value means that the rotational speed of the impulse turbine (25) is lower than when the bearing portions (20, 22) are not immersed in a liquid refrigerant. Therefore, the control means (63) decides that the immersion of the bearing portions (20, 22) in a liquid refrigerant has hindered the impulse turbine (25) from rotating and lowered the rotational speed thereof, and executes control in such a way that a refrigerant is inhibited from flowing into the turbine generator.

### ADVANTAGES OF THE INVENTION

In the turbine generator according to the present invention, the first storage space (10) is formed over the power generation mechanism (2) and the second storage space (11) is formed under the power generation mechanism (2), and further, the first and second storage spaces (10, 11) are provided with the first and second refrigerant outlet pipes (7, 8), respectively. Therefore, the turbine generator is capable of generating electric power with a refrigerant flowing thereinto using the turbine (25) and separating the refrigerant which has flowed out of the turbine (25) into gas and liquid refrigerants. In short, the turbine generator can be configured to perform a gas-liquid separation function when a two-phase refrigerant flows into the casing body (3, 4, 5). Besides, the turbine generator may be inclined and placed within the range where the bearing portions (20, 22) are not immersed in a liquid refrigerant stored in the second storage space (11). Therefore, the turbine generator can be placed with kept vertically shorter than when placed upright.

Furthermore, in the turbine generator according to the second aspect, the first trapping member (80) is provided, so that liquid drops of a refrigerant sent together with a gas refrigerant can be prevented from flowing out through the first refrigerant outlet pipe (7). Therefore, the turbine generator has a higher gas-liquid separation efficiency than without the first trapping member (80).

Moreover, in the turbine generator according to the third aspect, the second trapping member (81) is rotated and thereby releases trapped liquid drops forcedly therefrom. Therefore, the second trapping member (81) can trap liquid drops more efficiently than the first trapping member (80) making no rotational motion, thereby further enhancing the gas-liquid separation efficiency of the turbine generator.

In addition, in the turbine generator according to the fourth aspect, the guide member (29) is provided, and thereby for example, a two-phase refrigerant which has flowed out of the turbine (25) can be swirled along the inner circumferential surface of the casing body (3, 4, 5). Therefore, the two-phase refrigerant can be prevented from perpendicularly striking against the inner circumferential surface of the casing body (3, 4, 5) to send a liquid refrigerant contained in the two-phase refrigerant flying around. Besides, the two-phase refrigerant is swirled and thereby becomes easier to separate into gas and liquid refrigerants, so that the gas-liquid separation efficiency of the turbine generator can be certainly improved.

Furthermore, in the turbine generator according to the fifth aspect, the fixing members (20a, 22a) formed with the through holes (20b, 22b) are provided to allow a liquid refrigerant which has flowed out of the turbine (25) to flow more easily from the first storage space (10) to the second storage space (11). This makes it possible to suppress a stay of the separated liquid refrigerant inside of the first storage space (10).

Moreover, in the turbine generator according to the sixth aspect, the turbine (25) is configured by the impulse turbine (25), so that the velocity energy of a refrigerant flowing thereinto from the refrigerant inlet pipe (6) can be efficiently converted into generated electric energy. Therefore, when the refrigerant inflows at a relatively high speed from the refrigerant inlet pipe (6), the impulse turbine (25) contributes toward making the power-generation efficiency of the turbine generator higher than another type of turbine.

In addition, in the refrigerating apparatus according to the seventh aspect, the turbine generator according to the sixth aspect is connected to the refrigerant circuit (31) of the refrigerating apparatus, and thereby, the turbine generator is capable of generating electric power by recovering the kinetic energy of a refrigerant which has passed the expansion mechanism (54). Besides, the evaporator (51a) can be supplied with only a liquid refrigerant, and hence, a gas refrigerant can be prevented from flowing into the evaporator (51a) from the inlet side thereof. This enables the evaporator (51a) to evaporate the liquid refrigerant by effectively utilizing the area of a heat-transfer surface in an inlet part of the evaporator (51a). Therefore, the heat-transfer performance of the evaporator (51a) can be improved to operate the refrigerating apparatus at a higher efficiency.

Furthermore, in the refrigerating apparatus according to the eighth aspect, using the control means (63), the bearing portions (20, 22) of the power generation mechanism (2) can be prevented from being immersed in a liquid refrigerant stored in the liquid-refrigerant storage space (11).

### BRIEF DESCRIPTION OF THE DRAWINGS

[FIG. 1] FIG. 1 is a schematic sectional view of a turbine generator according to an embodiment of the present invention.
[FIG. 2] FIG. 2 is a schematic sectional view of a turbine generator according to Variation 1 of the embodiment.
[FIG. 3] FIG. 3 is a schematic sectional view of a turbine generator according to Variation 2 of the embodiment.
[FIG. 4] FIG. 4 is a circuit diagram of a refrigerant in an air-conditioning apparatus according to the embodiment.
[FIG. 5] FIG. 5 is a flow chart of immersion prevention control in operation executed by the air-conditioning apparatus according to the embodiment.

### DESCRIPTION OF EMBODIMENTS

An embodiment of the present invention will be below described in detail with reference to the drawings.

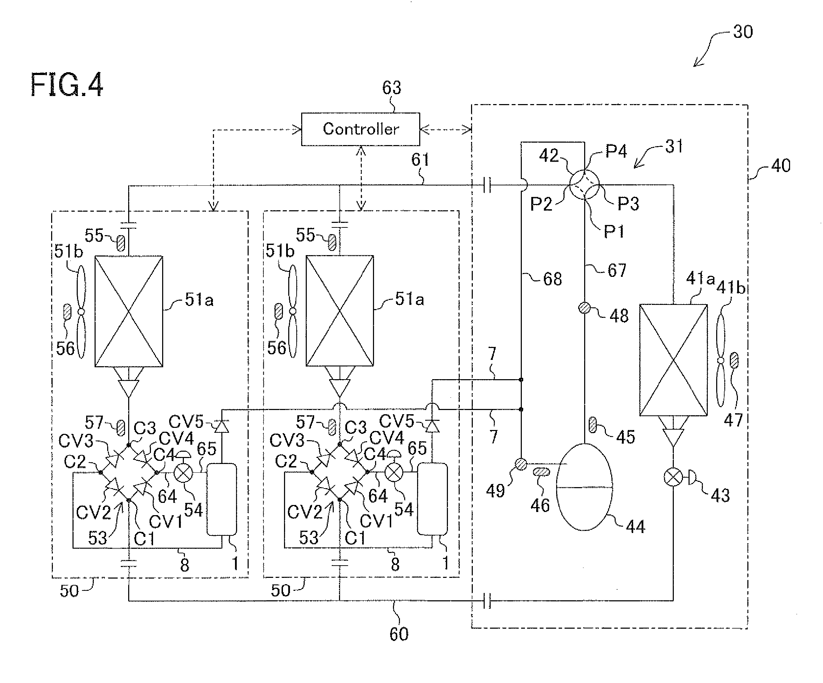

A turbine generator (1) according to this embodiment is employed for an air-conditioning apparatus (refrigerating apparatus) (30) provided with a refrigerant circuit (31) of FIG. 4 for conducting a vapor-compression refrigeration cycle. The turbine generator (1) is capable of recovering the kinetic energy of a refrigerant circulating through the refrigerant circuit (31) and after recovering this kinetic energy, separating the refrigerant into gas and liquid refrigerants.

A turbine generator (1) according to this embodiment is employed for an air-conditioning apparatus (refrigerating apparatus) (30) provided with a refrigerant circuit (31) of FIG. 4 for conducting a vapor-compression refrigeration cycle. The turbine generator (1) is capable of recovering the kinetic energy of a refrigerant circulating through the refrigerant circuit (31) and after recovering this kinetic energy, separating the refrigerant into gas and liquid refrigerants.

### - Configuration of Power Generating Turbine -

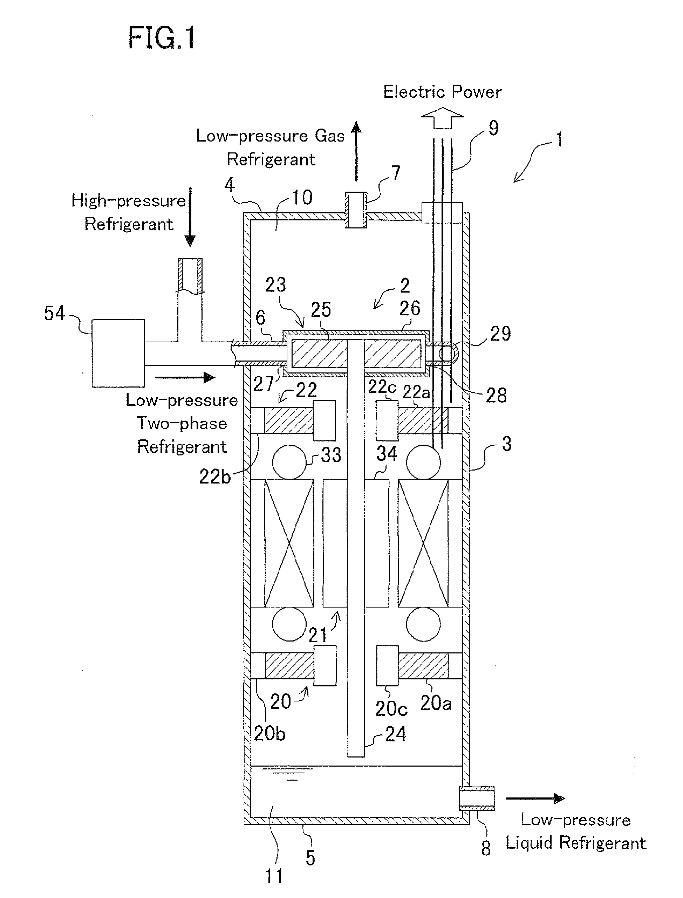

The turbine generator (1) includes, as shown in the schematic sectional view of FIG. 1 expressing an internal structure thereof, a casing (3, 4, 5) and a power generation mechanism (2) housed in the casing (3, 4, 5).

### <Casing>

The casing (3, 4, 5) includes a vertically-long cylindrical body portion (3), and top and bottom plates (4) and (5) covering the upper-end and lower-end openings of the body portion (3), respectively, and hence, is configured to be a closed container. A refrigerant inlet pipe (6) penetrates an upper side-face part of the body portion (3) of the casing (3, 4, 5), a gas-refrigerant outlet pipe (7) penetrates the top plate (4) at the center, and a liquid-refrigerant outlet pipe (8) penetrates a lower side-face part of the body portion (3). A power line (9) is provided which penetrates the top plate (4) from the inside of the casing (3, 4, 5). The above power generation mechanism (2) is arranged in a middle part of the casing (3, 4, 5) in the longitudinal directions and is formed thereover with a gas-refrigerant storage space (first storage space) (10) and thereunder with a liquid-refrigerant storage space (second storage space) (11). An end of the above gas-refrigerant outlet pipe (first refrigerant outlet pipe) (7) leads to the gas-refrigerant storage space (10) and an end of the above liquid-refrigerant outlet pipe (second refrigerant outlet pipe) (8) leads to the liquid-refrigerant storage space (11).

### <Power Generation Mechanism>

The power generation mechanism (2) is housed in the casing (3, 4, 5) and as shown in FIG. 1, is formed by connecting, from below toward above in order, a first bearing portion (bearing portion) (20), a power-generation coil portion (21), a second bearing portion (bearing portion) (22) and a turbine mechanism (23) by a turbine shaft (24) as a rotating shaft. In the figure, the turbine shaft (24) is noncontact with the first and second bearing portions (20, 22), but practically, the turbine shaft (24) is in contact with and supported by the first and second bearing portions (20, 22).

The first and second bearing portions (20, 22) are formed by bearing bodies (20c, 22c) and bearing fixing members (20a, 22a), respectively. The bearing bodies (20c, 22c) and the bearing fixing members (20a, 22a) are each cylindrical, and the bearing bodies (20c, 22c) are inserted into the bearing fixing members (20a, 22a) and fixed thereto. The outer circumferential surfaces of the bearing fixing members (20a, 22a) are fixed to the inner circumferential surface of the casing (3, 4, 5). The bearing fixing members (20a, 22a) are formed with a plurality of through holes (20b, 22b), respectively, extending from one side to the other side thereof. In the hollow part inside of the bearing bodies (20c, 22c), the turbine shaft (24) is inserted in such a way that the turbine shaft (24) is positioned at the center of the casing (3, 4, 5) and supported with freely rotatable by the bearing bodies (20c, 22c).

The above power-generation coil portion (21) is arranged in a middle part of the casing (3, 4, 5) in the longitudinal directions and is formed by a stator (33) and a rotor (34). The stator (33) is fixed to the casing (3, 4, 5) and the rotor (34) is arranged inside of the stator (33) and attached to a middle part of the turbine shaft (24).

The stator (33) is formed on the outer circumferential surface thereof with a plurality of core cut portions (not shown) formed by chamfering the outer circumferential surface along the longitudinal directions of the casing (3, 4, 5), the core cut portions being arranged at regular intervals over the circumferential directions. The core cut portions face the through holes (20b, 22b) of the bearing fixing members (20a, 22a) of the first and second bearing portions (20, 22), and the core cut portions and the through holes (20b, 22b) lead to the first storage space (10) and the second storage space (11) of the casing (3, 4, 5). The power line (9) penetrating the top plate (4) of the casing (3, 4, 5) is connected to the stator (33).

The turbine mechanism (23) includes an impulse turbine (turbine) (25) provided with a plurality of blades and an impulse-turbine casing (26) covering the impulse turbine (25). The impulse turbine (25) is attached to an upper-end part of the turbine shaft (24), and the impulse-turbine casing (26) is formed with an inflow portion (27) and an outflow portion (28). The inflow portion (27) leads to the above refrigerant inlet pipe (6), and the outflow portion (28) is provided with gently-curved outflow-portion piping (guide member) (29) attached thereto. The front-end opening part of the outflow-portion piping (29) is formed along the inner circumferential surface of the casing body (3, 4, 5), and hence, a refrigerant flowing out of the front-end opening part is designed to flow in the direction along the inner circumferential surface of the casing body (3, 4, 5). Besides, the impulse-turbine casing (26) is formed at the bottom with a hole for penetrating the turbine shaft (24).

### - Configuration of Air-conditioning Apparatus Provided with Power Generating Turbine -

FIG. 4 is a circuit diagram of a refrigerant in the air-conditioning apparatus (30) provided with the above turbine generator (1). As shown in FIG. 4, the air-conditioning apparatus (30) is a so-called separate type and includes an outdoor unit (40) and two indoor units (50). The outdoor unit (40) houses an outdoor fan (41b), an outdoor heat exchanger (41a), a four-way valve (42), an outdoor expansion valve (43) and a compressor (44). On the other hand, each indoor unit (50) houses an indoor fan (51b), an indoor heat exchanger (51a), a check valve bridge (53), an indoor expansion valve (54) and the turbine generator (1). The outdoor unit (40) is placed outdoors while the indoor units (50) are placed indoors, and the outdoor unit (40) and the two indoor units (50) connect by a pair of connection piping (60, 61). Here, each of the two indoor units (50) has the same configuration.

The air-conditioning apparatus (30) includes the refrigerant circuit (31) as a closed circuit having the compressor (44), the indoor heat exchangers (51a) and the like connected thereto. The refrigerant circuit (31) is filled with a refrigerant, and the refrigerant is circulated to conduct a vapor-compression refrigeration cycle.

In addition, the air-conditioning apparatus (30) includes a controller (63) controlling the cooling operation and heating operation of each indoor unit (50) and executing immersion prevention control in such a way that the bearing portions (20, 22) of the turbine generator (1) is prevented from being immersed in a liquid refrigerant.

The compressor (44) is provided with an inverter (not shown) connected thereto, and the inverter can supply an electric current to a compressor motor mounted in the compressor (44) and vary the frequency of the electric current. In other words, the operation of the inverter is controlled, and thereby, the rotational speed of the compressor motor of the compressor (44) can be freely varied within a specified range to make the capacity thereof variable. The compressor (44) is provided on the discharge side with discharge piping (67) and on the suction side with suction piping (68). The discharge piping (67) is provided with a discharge temperature sensor (45) and a high-pressure pressure sensor (48) and the suction piping (68) is provided with a suction temperature sensor (46) and a low-pressure pressure sensor (49). A measuring device (not shown) is also provided which measures a rotational speed of the compressor motor.

The above outdoor heat exchanger (41a) and indoor heat exchangers (51a) are each configured by a cross-fin-type fin-and-tube heat exchanger. The outdoor heat exchanger (41a) makes a heat exchange between a refrigerant circulating through the refrigerant circuit (31) and outdoor air sent thereinto by the outdoor fan (41b). The indoor heat exchangers (51a) each make a heat exchange between a refrigerant circulating through the refrigerant circuit (31) and indoor air sent thereinto by the indoor fan (51b). An outdoor-air temperature sensor (47) and an indoor temperature sensor (56) are provided near the outdoor fan (41b) and the indoor fan (51b), respectively.

The above outdoor expansion valve (43) and indoor expansion valves (54) are each a motor-operated expansion valve whose opening is adjustable, and the opening thereof can be suitably varied according to an electric signal inputted from the above controller (63).

The above four-way valve (42) has four ports: a first port (P1) connected to the discharge piping (67) of the compressor (44), a second port (P2) connected via the connection piping (61) to the gas-side end as an end of each indoor heat exchanger (51a), a third port (P3) connected via the connection piping (61) to the gas-side end as an end of the outdoor heat exchanger (41a) and a fourth port (P4) connected to the suction piping (68) of the compressor (44). The four-way valve (42) switches from a first state (shown by continuous lines of FIG. 4) where the first port (P1) and the third port (P3) connect and the second port (P2) and the fourth port (P4) connect, to a second state (shown by broken lines of FIG. 4) where the first port (P1) and the second port (P2) connect and the third port (P3) and the fourth port (P4) connect, and vice versa.

The above check valve bridges (53) each include, as shown in FIG. 4, first to fourth check valves (CV1-CV4) and has first to fourth connection portions (C1-C4) connecting the check valve bridge (53) and the refrigerant circuit (31). The first connection portion (C1) is arranged between the first check valve (CV1) and the second check valve (CV2) and connected via the above connection piping (60) to the liquid-side end as an end of the outdoor heat exchanger (41a). The second connection portion (C2) is arranged between the second check valve (CV2) and the third check valve (CV3) and connected to the liquid-refrigerant outlet pipe (8) of the turbine generator (1). The third connection portion (C3) is arranged between the third check valve (CV3) and the fourth check valve (CV4) and connected to the liquid-side end as an end of the indoor heat exchanger (51a). The fourth connection portion (C4) is arranged between the fourth check valve (CV4) and the first check valve (CV1) and connected to an inlet pipe (64) provided with the indoor expansion valve (54).

Here, the first check valve (CV1) is oriented in such a way that a refrigerant is permitted to flow from the first connection portion (C1) toward the fourth connection portion (C4); the second check valve (CV2), from the second connection portion (C2) toward the first connection portion (C1); the third check valve (CV3), from the second connection portion (C2) toward the third connection portion (C3); and the fourth check valve (CV4), from the third connection portion (C3) toward the fourth connection portion (C4).

An outlet piping (65) provided with the indoor expansion valve (54) is connected to the refrigerant inlet pipe (6) of the turbine generator (1). The other end of the gas-refrigerant outlet pipe (7) of the turbine generator (1) is connected to the suction piping (68). The gas-refrigerant outlet pipe (7) is provided with a fifth check valve (CV5) oriented in such a way that a refrigerant is permitted to flow from the turbine generator (1) toward the suction piping (68).

In addition, the turbine generator (1) is provided with a power meter (not shown) measuring generated electric energy.

A group of sensors are connected via electric wiring to the above controller (63): the discharge temperature sensor (45), the suction temperature sensor (46), a gas-side refrigerant temperature sensor (55), a liquid-side refrigerant temperature sensor (57), the outdoor-air and indoor temperature sensors (47, 56) and the pressure sensors (48, 49). Further, a group of actuators are connected via electric wiring to the controller (63): the compressor (44), the outdoor and indoor fans (41b, 51b), the four-way valve (42) and the indoor and outdoor expansion valves (54, 43). The controller (63) is configured to control the group of actuators on the basis of a detection signal from the group of sensors.

### - Operation of Air-conditioning Apparatus Provided with Power Generating Turbine

An operation of the air-conditioning apparatus (30) provided with the turbine generator (1) will be described. A description will be given first about cooling and heating operations of the air-conditioning apparatus (30) and next about an operation of the turbine generator (1) and immersion prevention control executed by the controller (63).

### <Cooling Operation of Air-conditioning Apparatus>

In the cooling operation of the air-conditioning apparatus (30), the four-way valve (42) switches to the first state shown by continuous lines of FIG. 4, the outdoor expansion valve (43) is fully opened and the opening of the indoor expansion valve (54) is suitably adjusted.

A high-pressure refrigerant compressed in the compressor (44) passes through the discharge piping (67) and flows into the first port (P1) of the four-way valve (42). The high-pressure refrigerant which has flowed into the first port (P1) of the four-way valve (42) outflows from the third port (P3) and thereafter flows into the outdoor heat exchanger (41a). In the outdoor heat exchanger (41a), the high-pressure refrigerant is cooled with outdoor air sent from the outdoor fan (41b) and gives heat to the outdoor air.

The high-pressure refrigerant cooled in the outdoor heat exchanger (41a) passes through the outdoor expansion valve (43) and the connection piping (60) and flows into the first connection portion (C1) of the check valve bridge (53) of each indoor unit (50). The high-pressure refrigerant which has flowed into the first connection portion (C1) flows in the direction permitted by the first check valve (CV1), passes the fourth connection portion (C4) and flows into the indoor expansion valve (54). In the indoor expansion valve (54), the high-pressure refrigerant turns to a low-pressure two-phase refrigerant after the pressure thereof has been reduced to a predetermined pressure and flows out of the indoor expansion valve (54).

The low-pressure two-phase refrigerant which has flowed out of the indoor expansion valve (54) flows into the turbine generator (1). The low-pressure two-phase refrigerant which has flowed into the turbine generator (1) strikes against the impulse turbine (25) and rotates the impulse turbine (25). Thereafter, it is separated into a low-pressure gas refrigerant and a low-pressure liquid refrigerant, and then, each of them flows out of the turbine generator (1).

The gas refrigerant which has flowed out of the turbine generator (1) flows in the direction permitted by the fifth check valve (CV5) and is sucked into the compressor (44). On the other hand, the low-pressure liquid refrigerant which has flowed out of the turbine generator (1) flows into the second connection portion (C2) of the check valve bridge (53). The low-pressure liquid refrigerant which has flowed into the second connection portion (C2) flows in the direction permitted by the third check valve (CV3), passes the third connection portion (C3) and flows into the indoor heat exchanger (51a). In the indoor heat exchanger (51a), the low-pressure liquid refrigerant is evaporated with indoor air sent from the indoor fan (51b) and absorbs heat from the indoor air to cool the indoor air. The low-pressure gas refrigerant which has flowed out of the indoor heat exchanger (51a) flows through the connection piping (61) into the second port (P2) of the four-way valve (42). The low-pressure gas refrigerant which has flowed into the second port (P2) outflows from the fourth port (P4), and thereafter, passes through the suction piping (68) and is sucked into the compressor (44). Then, the compressor (44) compresses the sucked low-pressure gas refrigerant again and discharges it.

### <Heating Operation of Air-conditioning Apparatus>

In the heating operation of the air-conditioning apparatus (30), the four-way valve (42) switches to the second state shown by broken lines of FIG. 4, the openings of the outdoor expansion valve (43) and the indoor expansion valve (54) are suitably adjusted.

A high-pressure refrigerant compressed in the compressor (44) passes through the discharge piping (67) and flows into the first port (P1) of the four-way valve (42). The high-pressure refrigerant which has flowed into the first port (P1) of the four-way valve (42) outflows from the second port (P2) and thereafter flows into each indoor heat exchanger (51a). In the indoor heat exchanger (51a), the high-pressure refrigerant is cooled with indoor air sent from the indoor fan (51b), gives heat to the indoor air and thereby heats the indoor air.

The high-pressure refrigerant cooled in the indoor heat exchanger (51a) flows into the third connection portion (C3) of the check valve bridge (53). The high-pressure refrigerant which has flowed into the third connection portion (C3) flows in the direction permitted by the fourth check valve (CV4), passes the fourth connection portion (C4) and flows into the indoor expansion valve (54). In the indoor expansion valve (54), the pressure of the high-pressure refrigerant is adjusted in such a way that the degree of subcooling thereof becomes a predetermined temperature degree, and then, the high-pressure refrigerant flows out of the indoor expansion valve (54).

The pressure-adjusted refrigerant which has flowed out of the indoor expansion valve (54) flows into the turbine generator (1). The refrigerant which has flowed into the turbine generator (1) strikes against the impulse turbine (25) and rotates the impulse turbine (25). Thereafter, it is separated into a gas refrigerant and a liquid refrigerant, and then, each of them flows out of the turbine generator (1).

The gas refrigerant which has flowed out of the turbine generator (1) flows in the direction permitted by the fifth check valve (CV5) and is sucked into the compressor (44). On the other hand, the liquid refrigerant which has flowed out of the turbine generator (1) flows into the second connection portion (C2) of the check valve bridge (53). The liquid refrigerant which has flowed into the second connection portion (C2) flows in the direction permitted by the second check valve (CV2), passes the first connection portions (C1) and the connection piping (60) and flows into the outdoor expansion valve (43). In the outdoor expansion valve (43), the refrigerant turns to a low-pressure refrigerant after the pressure thereof has been reduced to a predetermined pressure and flows out of the outdoor expansion valve (43). The refrigerant which has flowed out of the outdoor expansion valve (43) flows into the outdoor heat exchanger (41a). In the outdoor heat exchanger (41a), the low-pressure refrigerant is evaporated with outdoor air sent from the outdoor fan (41b) and the low-pressure liquid refrigerant absorbs heat from the outdoor air. The low-pressure gas refrigerant which has flowed out of the outdoor heat exchanger (41a) flows into the third port (P3) of the four-way valve (42). The low-pressure gas refrigerant which has flowed into the third port (P3) outflows from the fourth port (P4), and thereafter, passes through the suction piping (68) and is sucked into the compressor (44). Then, the compressor (44) compresses the sucked low-pressure gas refrigerant again and discharges it.

### <Operation of Power Generating Turbine>

The two-phase refrigerant which has flowed out of the indoor expansion valve (54) of the refrigerant circuit (31) flows into the casing (3, 4, 5) from the refrigerant inlet pipe (6). The two-phase refrigerant which has flowed into the casing (3, 4, 5) flows into the impulse-turbine casing (26) from the inflow portion (27) of the impulse-turbine casing (26). The two-phase refrigerant which has flowed into the impulse-turbine casing (26) strikes against the blades of the impulse turbine (25) and rotates the impulse turbine (25). As the impulse turbine (25) is rotated, the turbine shaft (24) is rotated together around the axial core thereof and the rotor (34) is also rotated with respect to the stator (33), thereby causing the power-generation coil portion (21) to generate electric power. The electric power is sent through the power line (9) to the outside of the casing (3, 4, 5).

The two-phase refrigerant which has struck against the blades of the impulse turbine (25) outflows from the outflow portion (28) of the impulse-turbine casing (26). After flowing out, the two-phase refrigerant is swirled along the inner circumferential surface of the casing (3, 4, 5) by the outflow-portion piping (29) attached to the outflow portion (28). The swirling flow facilitates a gas-liquid separation of the two-phase refrigerant.

Then, a gas refrigerant separated from the two-phase refrigerant goes upward inside of the casing (3, 4, 5), is stored in the gas-refrigerant storage space (10) and outflows through the gas-refrigerant outlet pipe (7). On the other hand, a liquid refrigerant separated from the two-phase refrigerant goes downward through the space formed by the core cut portions and the through holes (20b, 22b) of the power generation mechanism (2) toward the liquid-refrigerant storage space (11). Then, the liquid refrigerant is stored in the liquid-refrigerant storage space (11) and outflows through the liquid-refrigerant outlet pipe (8).

### <Immersion Prevention Control>

The above immersion prevention control is executed to protect the first bearing portion (20) of the power generation mechanism (2) by preventing the first bearing portions (20) from being immersed in a liquid refrigerant stored in the liquid-refrigerant storage space (11). This control is based upon the fact that when the first bearing portion (20) is immersed therein, the rotational speed of the impulse turbine (25) tends to be lower and the generated electric energy thereof be smaller than when it is not immersed therein.

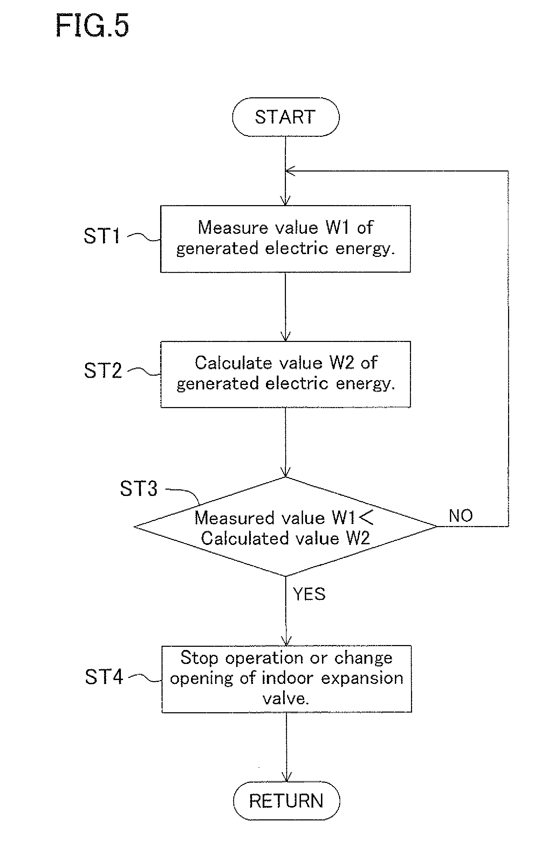

The above controller (63) includes an immersion decision section deciding whether the first bearing portion (20) is immersed or not. The immersion decision section has a database for, on the basis of operation data to be inputted on the air-conditioning apparatus (30), outputting electric energy generated by the turbine generator (1). The database is created on the basis of operation data in a state where the first bearing portion (20) is not immersed, and in other words, the database outputs generated electric energy in the state where the first bearing portion (20) is not immersed. Here, the operation data is values detected by the above group of sensors: the discharge temperature sensor (45), the suction temperature sensor (46), the gas-side refrigerant temperature sensor (55), the liquid-side refrigerant temperature sensor (57), the outdoor-air and indoor temperature sensors (47, 56) and the pressure sensors (48, 49) which are connected to the controller (63), or the above rotational-speed measuring device and power meter. An operation of the immersion prevention control when the air-conditioning apparatus (30) is in operation will be described with reference to the control flow of FIG. 5.

The air-conditioning apparatus (30) is turned ON using an operation switch thereof, and thereby, starts an air-conditioning operation and the immersion prevention control.

In a step ST1, the power meter measures electric energy generated by the turbine generator (1) in the air-conditioning operation and obtains a measured value W1.

Next, in a step ST2, using the database, electric energy generated by the turbine generator (1) is calculated from the operation data in the air-conditioning operation and obtains a calculated value W2.

In a step ST3, if the measured value W1 is smaller than the calculated value W2, the decision is made that the first bearing portion (20) has been immersed, and then, the processing shifts to a step ST4. On the other hand, if the measured value W1 is not smaller than the calculated value W2, the processing returns to the step ST1.

In the step ST4, the controller (63) stops the operation of the air-conditioning apparatus (30) or adjusts the opening of the indoor expansion valve (54) to stop a liquid refrigerant from flowing into the turbine generator (1).

The above control flow is repeated to execute the operation of the immersion prevention control when the air-conditioning apparatus (30) is in operation.

### - Advantages of Embodiment -

According to this embodiment, the gas-refrigerant storage space (10) is formed over the power generation mechanism (2) and the liquid-refrigerant storage space (11) is formed under the power generation mechanism (2), and further, the gas-refrigerant storage space (10) and the liquid-refrigerant storage space (11) are provided with the gas-refrigerant outlet pipe (7) and the liquid-refrigerant outlet pipe (8), respectively. Therefore, a refrigerant which has struck against the impulse turbine (25) can be separated into gas and liquid refrigerants, and hence, the turbine generator (1) can be configured to perform a gas-liquid separation function. Besides, the turbine generator (1) may be inclined and placed within the range where the first bearing portion (20) is not immersed in a liquid refrigerant stored in the liquid-refrigerant storage space (11). Therefore, the turbine generator (1) can be placed with kept vertically shorter than when placed upright.

In addition, the outflow-portion piping (29) is provided in the outflow portion (28) of the impulse-turbine casing (26), and thereby, a two-phase refrigerant which has struck against the impulse turbine (25) can be swirled along the inner circumferential surface of the casing (3, 4, 5). Therefore, the two-phase refrigerant can be prevented from perpendicularly striking against the inner circumferential surface of the casing (3, 4, 5) to send a liquid refrigerant contained in the two-phase refrigerant flying around. Besides, the two-phase refrigerant is swirled and thereby becomes easier to separate into gas and liquid refrigerants, so that the gas-liquid separation efficiency of the turbine generator (1) can be certainly improved.

Furthermore, the bearing fixing members (20a, 22a) are formed with the through holes (20b, 22b), and thereby, a liquid refrigerant separated after striking against the impulse turbine (25) can flow more easily from the gas-refrigerant storage space (10) to the liquid-refrigerant storage space (11). This makes it possible to suppress a stay of the separated liquid refrigerant inside of the gas-refrigerant storage space (10).

Moreover, the turbine generator (1) is connected to the refrigerant circuit (31) of the air-conditioning apparatus (30), and thereby, the turbine generator (1) is capable of generating electric power by recovering the kinetic energy of a refrigerant which has passed the expansion mechanism (54). Besides, the turbine generator (1) has the gas-liquid separation mechanism, and thereby, the evaporator (51a) can be supplied with only a liquid refrigerant. Therefore, a gas refrigerant can be prevented from flowing into the evaporator (51a) from the inlet side thereof to enable the evaporator (51a) to evaporate the liquid refrigerant by effectively utilizing the area of a heat-transfer surface in an inlet part of the evaporator (51a). This makes it possible to improve the heat-transfer performance of the evaporator (51a).

In addition, the controller (63) executes immersion prevention control to prevent the first bearing portion (20) of the power generation mechanism (2) from being immersed in a liquid refrigerant stored in the liquid-refrigerant storage space (11). Accordingly, without providing a liquid-level sensor separately, the first bearing portion (20) can be prevented from being immersed therein.

### - Variation 1 of Embodiment -

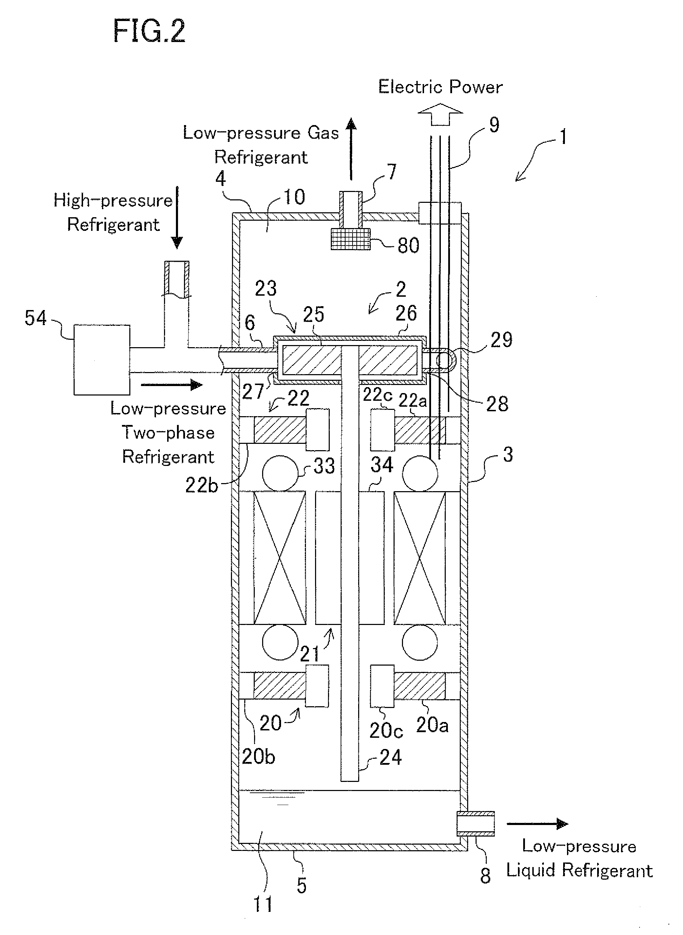

FIG. 2 is a schematic longitudinal sectional view of a turbine generator (1) according to Variation 1 of the embodiment.

In Variation 1, as shown in FIG. 2, a mesh member (trapping member) (80) facing a pipe end of the gas-refrigerant outlet pipe (7) is provided, and thereby, even if liquid drops of a refrigerant fly around inside of the gas-refrigerant storage space (10), the mesh member (80) can trap those liquid drops and prevent them from flowing out of the casing (3, 4, 5) through the gas-refrigerant outlet pipe (7). Therefore, the turbine generator (1) according to Variation 1 has a higher gas-liquid separation efficiency than without the mesh member (80).

### - Variation 2 of Embodiment -

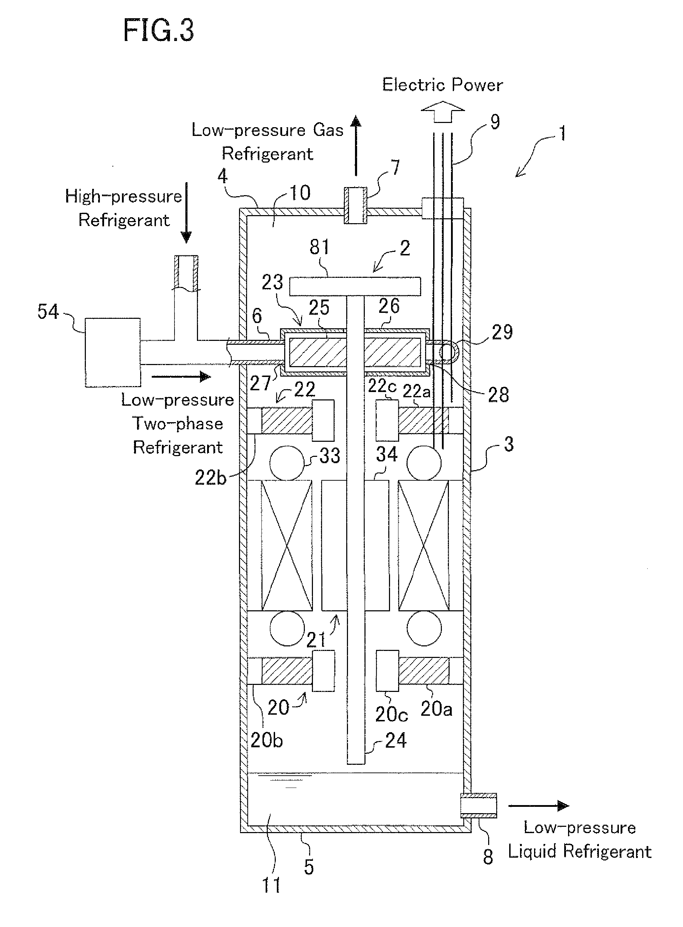

FIG. 3 is a schematic longitudinal sectional view of a turbine generator (1) according to Variation 2 of the embodiment.

In Variation 2, as shown in FIG. 3, the turbine shaft (24) is configured to penetrate the impulse turbine (25) at the center thereof, and a rotating plate (trapping member) (81) is attached to the end part of the turbine shaft (24) on the side of the impulse turbine (25). According to this configuration, even if liquid drops flying around inside of the gas-refrigerant storage space (10) adhere to the rotating plate (81), the rotating plate (81) makes a rotational motion together with the turbine shaft (24) and forcedly releases the adherent liquid drops from the rotating plate (81) itself by the centrifugal force of the rotational motion. Therefore, the liquid drops can be more quickly released than when the rotating plate (81) makes no rotational motion, and again, liquid drops are allowed to adhere thereto. Hence, liquid drops can adhere and separate more smoothly than when the rotating plate (81) makes no rotational motion, thereby further improving the gas-liquid separation efficiency of the turbine generator (1).

### «Other Embodiments»

The above embodiment may be configured as follows.

In the above embodiment, the turbine mechanism (23) includes the impulse turbine (25), but the configuration thereof is not limited to this, and for example, the impulse turbine (25) may be replaced with a reaction turbine. As is different from the impulse turbine (25), the reaction turbine reduces the pressure of a refrigerant before flowing into and after flowing out of the reaction turbine and utilizes a reaction generated by reducing the pressure to rotate the impeller (rotor blades) thereof. Hence, the reaction turbine is employed to spare the above indoor expansion valve (54) as a pressure reducing mechanism provided on the upstream side of the turbine and simplify the configuration of the air-conditioning apparatus (30).

In the above embodiment, no limitation is given on the other end of the power line (9) connected to the power-generation coil portion (21). However, the other end may be connected to the compressor motor of the compressor (44).

In the above embodiment, the two indoor units (50) are provided, but the number thereof is not necessarily limited to two, and hence, one, or three or more, may be provided.

The aforementioned embodiments are essentially preferred illustrations, and hence, the scope of the present invention, the one applied thereto or the use thereof is not supposed to be limited.

### INDUSTRIAL APPLICABILITY

As described so far, the present invention is useful for a turbine generator and a refrigerating apparatus provided with the turbine generator.

### DESCRIPTION OF REFERENCE CHARACTERS

- 1: Turbine Generator
- 2: Power generation mechanism
- 7: Gas-refrigerant Outlet Pipe (First Refrigerant Outlet Pipe)
- 8: Liquid-refrigerant Outlet Pipe (Second Refrigerant Outlet Pipe)
- 10: Gas-refrigerant Storage Space (First Storage Space)
- 11: Liquid-refrigerant Storage Space (Second Storage Space)
- 21: Power-generation Coil Portion
- 25: Impulse Turbine (Turbine)
- 29: Outflow-portion Piping (Guide Member)
- 30: Air-conditioning Apparatus (Refrigerating Apparatus)
- 31: Refrigerant Circuit
- 40: Outdoor Unit
- 50: Indoor Unit
- 80: Mesh Member (Trapping Member)
- 81: Rotating Plate (Trapping Member)

## Claims

1. A turbine generator, comprising:
a casing body (3, 4, 5); and
a power generation mechanism (2) housed in the casing body (3, 4, 5), wherein
the power generation mechanism (2) including a turbine (25) making a rotational motion, a turbine shaft (24) attached to the turbine (25), a power-generation coil portion (21) penetrated by the turbine shaft (24), and bearing portions (20, 22) arranged on both sides in the axial directions of the power-generation coil portion (21) and supporting the turbine shaft (24) with the turbine shaft (24) rotatable,
the power-generation coil portion (21) and the bearing portions (20, 22) being fixed to the inner circumferential surface of the casing body (3, 4, 5),
a refrigerant inlet pipe (6) being provided which penetrates the casing body (3, 4, 5) and a pipe end of which faces the turbine (25) of the power generation mechanism (2),
the turbine (25) being rotated by a refrigerant flowing thereinto from the refrigerant inlet pipe (6) to generate power in the power-generation coil portion (21), and
a first storage space (10) is formed over the power generation mechanism (2) and a second storage space (11) is formed under the power generation mechanism (2), and a first refrigerant outlet pipe (7) is provided on the side of the first storage space (10) and a second refrigerant outlet pipe (8) is provided on the side of the second storage space (11).

2. The turbine generator of claim 1, wherein a first trapping member (80) trapping a liquid drop contained in a gas refrigerant inside of the first storage space (10) is provided in the first storage space (10), and the first trapping member (80) faces a pipe end of the first refrigerant outlet pipe (7).

3. The turbine generator of claim 1 or 2, wherein
the turbine shaft (24) is configured to penetrate the turbine (25) at the center thereof, and
a second trapping member (81) trapping a liquid drop contained in a gas refrigerant inside of the first storage space (10) is attached to the end part of the turbine shaft (24) on the side of the turbine (25).

4. The turbine generator of any one of claims 1 to 3, wherein a guide member (29) is provided which swirls a refrigerant flowing out of the turbine (25) along the inner circumferential surface of the casing body (3, 4, 5) and guides the refrigerant to the second storage space (11).

5. The turbine generator of claim 1 or 4, wherein
fixing members (20a, 22a) are provided which fix the bearing portions (20, 22) to the casing body (3, 4, 5), and
the fixing members (20a, 22a) are arranged between the casing body (3, 4, 5) and the bearing portions (20, 22) and are each formed with one or a plurality of through holes (20b, 22b).

6. The turbine generator of any one of claims 1 to 5, wherein the turbine (25) is configured by an impulse turbine (25).

7. A refrigerating apparatus which includes a refrigerant circuit (31) for conducting a vapor-compression refrigeration cycle, the refrigerant circuit (31) being formed by connecting a compressor (44), a radiator (51a), an expansion mechanism (54) and an evaporator (51a) by refrigerant piping,
wherein the turbine generator according to claim 6 is provided, the refrigerant inlet pipe (6) of the turbine generator is connected to outlet piping (65) of the expansion mechanism (54), the first refrigerant outlet pipe (7) is connected to suction piping (68) of the compressor (44), and the second refrigerant outlet pipe (8) is connected to inlet piping of the evaporator (51a).

8. The refrigerating apparatus of claim 7, wherein
a generated-energy measurement section is provided which measures electric energy generated by the turbine generator, and an arithmetic section is provided which on the basis of the input of operation data on the refrigerating apparatus, outputs electric energy generated by the turbine generator when the bearing portions (20, 22) are not immersed in a liquid refrigerant, and
a control means (63) is provided which if a value measured by the generated-energy measurement section is smaller than a value calculated by the arithmetic section, then executes control in such a way that a refrigerant is inhibited from flowing into the turbine generator.
